# FASCICULE DE BREVET EUROPEEN

(11) **EP 2 218 925 B1**
(45) Date de publication et mention de la délivrance du brevet: **21.09.2011**
(21) Numéro de dépôt: 10151934.6
(22) Date de dépôt: 28.01.2010
(51) Int. Cl.: F16C 23/08, F16C 23/02, F16C 11/10, F16C 35/077, G01M 13/02

(54) **Dispositif de positionnement d'un objet**
Vorrichtung zum Positionieren eines Objekts
Device for positioning an object

(30) Priorité: 17.02.2009 FR 0951013
(43) Date de publication de la demande: 18.08.2010
(73) Titulaire: Peugeot Citroën Automobiles SA, 78140 Vélizy-Villacoublay (FR)
(72) Inventeur: Palpacuer, Eric, 75013 Paris (FR)
(74) Mandataire: Fosse, Danièle

(56) Documents cités:
- EP-A1- 1 254 812
- US-A- 3 137 373

## Description

La présente invention concerne un dispositif de positionnement d'un objet selon trois axes de translation et trois axes de rotation, et plus particulièrement un dispositif support d'un arbre tournant permettant d'orienter ledit arbre selon trois axes de translation et trois axes de rotation. Le dispositif permet par exemple d'aligner et de solidariser ledit arbre du dispositif avec l'axe d'un élément tournant (par exemple, la poulie d'un alternateur) dans le but d'étudier le comportement de cet élément tournant.

La plupart des dispositifs de positionnement d'un objet, par exemple les supports d'objets pour un examen au microscope, permettent des déplacements de l'objet selon deux, voire trois, axes orthogonaux entre eux. Cependant ces dispositifs ne sont pas suffisants pour aligner correctement un arbre de rotation avec un autre arbre de rotation, dans le but par exemple de les coupler entre eux : il leur manque la possibilité d'orienter l'objet selon des axes de rotation.

Les systèmes à rotule permettent d'orienter correctement un objet. De tels systèmes sont par exemples décrits dans les brevets suivants : FR 2 872 233, FR 2 369 553 et FR 2 500 548. Ainsi, dans EP 1 254 812 est décrit un dispositif de positionnement d'un objet comprenant des moyens de maintien de l'objet et des moyens de support des moyens de maintien, les moyens de support comprenant des éléments de translation de l'objet selon trois axes orthogonaux entre eux, ce dispositif comportant des moyens d'articulation de l'objet par rapport aux moyens de maintien. Cependant les systèmes décrits ne permettent d'aligner un objet que selon trois axes de rotation, ce qui est insuffisant.

La présente invention concerne un dispositif permettant de positionner un objet selon trois axes de translation et trois axes de rotation.

De façon plus précise, l'invention concerne un dispositif de positionnement d'un objet comprenant des moyens de maintien de l'objet et des moyens de support des moyens de maintien, les moyens de support comprenant des éléments de translation de l'objet selon trois axes orthogonaux entre eux. Selon l'invention, le dispositif comporte des moyens d'articulation de l'objet, ces moyens étant fixés, d'une part, aux moyens de maintien de l'objet et, d'autre part, aux moyens de support.

Selon un mode de réalisation, les moyens de support comprennent un bâti et un palier support ; les éléments de translation comprennent une première et une deuxième série de fentes percées dans le bâti et une troisième série de fentes percées dans le palier de support, les fentes de l'une des séries étant orthogonales aux fentes des autres séries ; le palier est fixé au bâti à l'aide de moyens de fixation (des boulons par exemple) pouvant coulisser dans les fentes.

Les moyens d'articulation comportent une rotule constituée d'un premier élément fixé audit palier de support et d'un deuxième élément fixé auxdits moyens de maintien de l'objet.

Les moyens de maintien de l'objet peuvent avantageusement comporter des vis de réglage prenant appui contre ledit palier de support.

Lorsque l'objet est un arbre tournant autour d'un axe Y2-Y2', les moyens de maintien de l'objet comportent avantageusement un manchon et des roulements intercalés entre ledit arbre tournant et ledit manchon, ledit deuxième élément de rotule étant fixé autour du manchon.

Selon un autre mode de réalisation, le dispositif peut comporter des moyens de liaison dudit arbre tournant avec un organe muni d'un élément tournant autour d'un axe Y1-Y1', le dispositif permettant d'aligner l'axe Y2-Y2' avec l'axe Y1-Y1'.

Le dispositif peut comporter des capteurs, tels que des moyens de mesure de la vitesse de rotation de l'arbre tournant dudit objet.

Ledit élément tournant peut être par exemple la poulie d'un alternateur.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- les figures 1 et 2 montrent en perspective, selon deux angles différents, un mode de réalisation de l'invention, le dispositif étant couplé à la poulie d'un alternateur;
- la figure 3 est une vue en perspective du dispositif couplé à une poulie;
- la figure 4 représente en coupe le dispositif de positionnement et la poulie de la figure 3;
- la figure 5 montre en détails une partie de la figure 4; et
- la figure 6 représente une coupe du dispositif permettant de comprendre aisément l'articulation de l'arbre tournant.

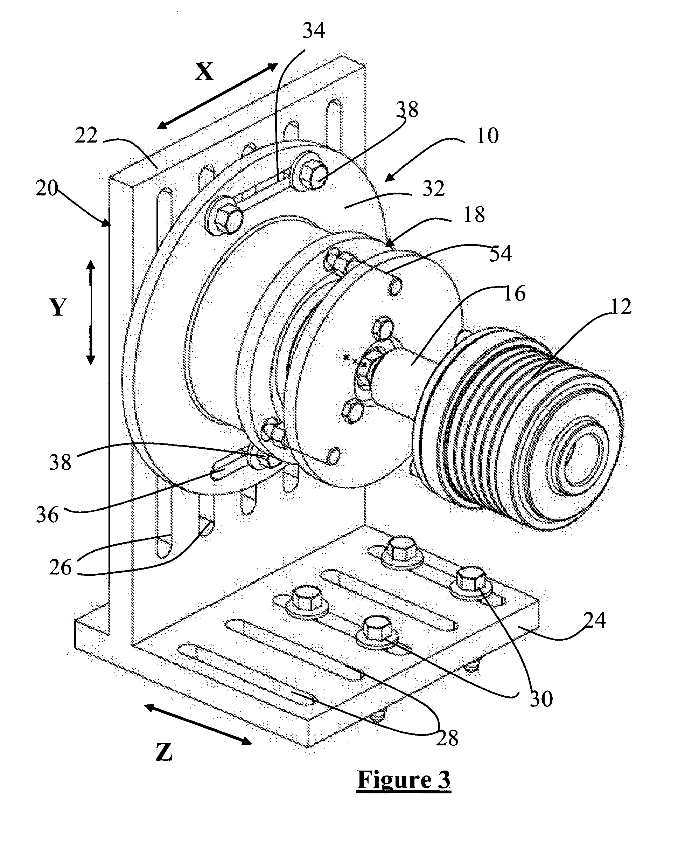

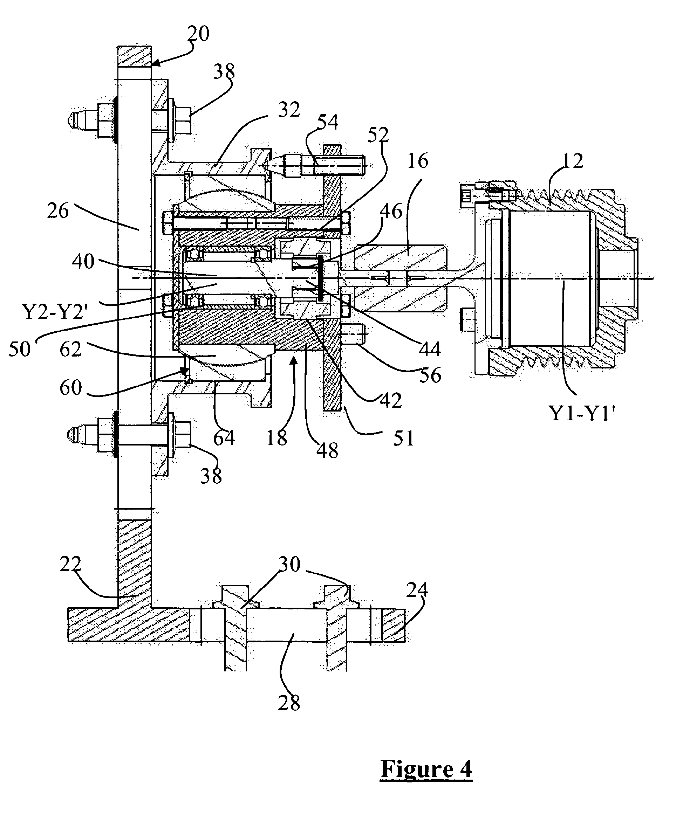

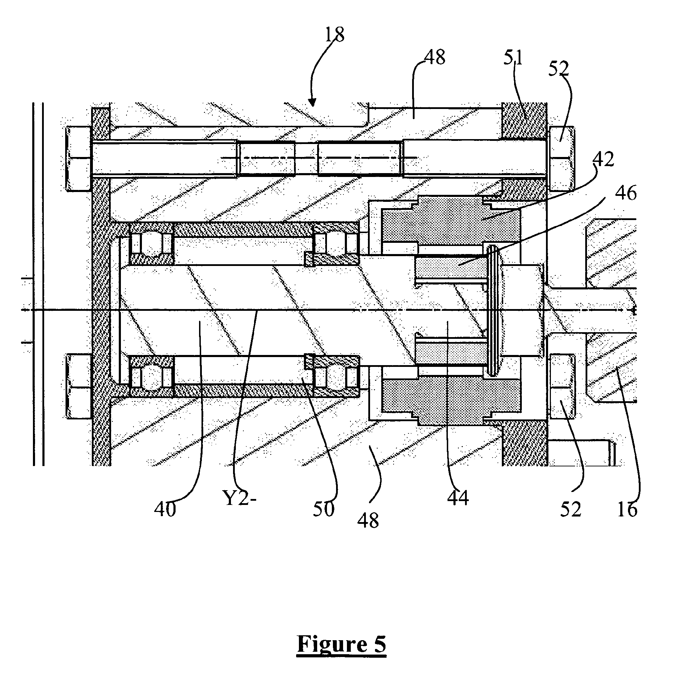

Le mode de réalisation décrit ci-après concerne tout particulièrement un dispositif 10 support de capteurs pour la mesure de paramètres relatifs à la rotation d'une poulie 12 d'un alternateur 14. Ce dispositif permet de positionner, plus précisément d'aligner en rendant coaxiaux, l'axe de rotation de la poulie avec un axe de rotation du dispositif 10. Des moyens 16, par exemple un manchon cylindrique, permettent de solidariser l'axe de la poulie 12 avec un arbre tournant 40 (figure 4, 5 ou 6) du dispositif 10. Des moyens de maintien 18 (figure 3, 4, 5 ou 6) permettent de maintenir l'axe de rotation du dispositif 10. De façon générale, le dispositif permet de positionner un "objet" (ici, l'arbre tournant 40 et donc son axe de rotation).

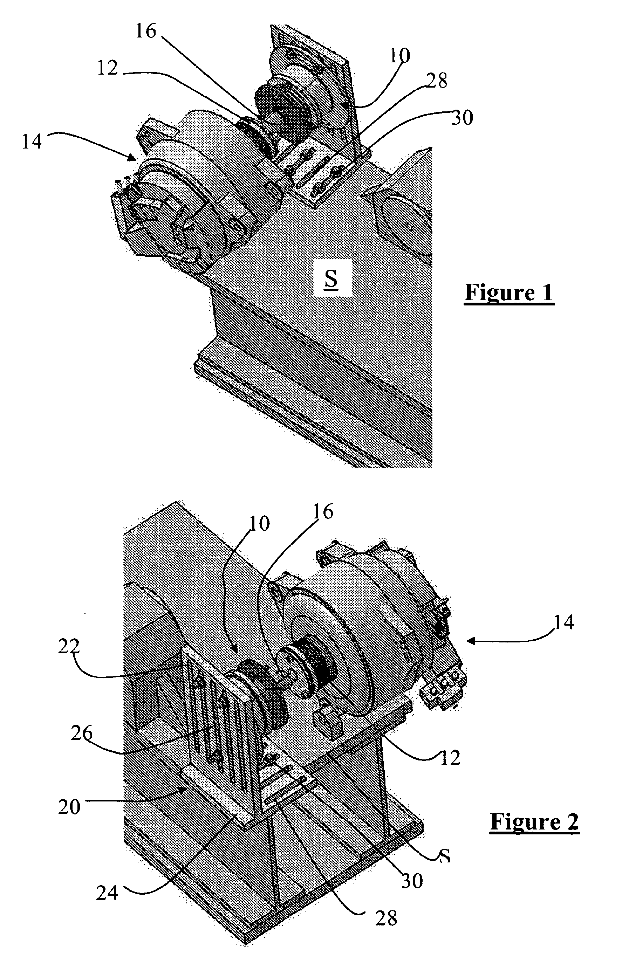

Le dispositif de positionnement 10 comporte un bâti 20 composé de deux plaques rigides (par exemple métalliques) 22 et 24 (figure 3) perpendiculaires l'une à l'autre. Chacune des plaques 22 et 24 est munie d'une première et d'une deuxième série de fentes respectivement 26 et 28, les fentes d'une même série étant parallèles entre elles et orthogonales aux fentes de l'autre série. La plaque 24 est fixée sur un support S (figures 1 et 2) par des boulons 30 traversant les fentes 28.

Les moyens de maintien 18 sont fixés à un palier support 32, qui comporte une troisième série de fentes (deux fentes 34 et 36) parallèles entre elles et orthogonales aux fentes 26 et 28. Le palier support 32 est fixé au bâti 20 à l'aide de boulons 38.

Les moyens de maintien 18 peuvent donc subir trois mouvements de translation orthogonaux entre eux: un premier mouvement de translation selon un axe X (figure 3) grâce aux fentes 34, un deuxième mouvement selon un axe Y grâce aux fentes 26 et un troisième mouvement selon un axe Z grâce aux fentes 28. Les axes X, Y et Z sont orthogonaux entre eux.

Sur la figure 4, l'arbre 44 tourne autour d'un axe Y2-Y2'. Le dispositif 10 permet d'aligner cet axe Y2-Y2' avec l'axe de rotation Y1-Y1' de la poulie 12.

Les moyens de maintien de l'arbre de rotation 40 comportent un stator 42 entourant l'extrémité 44 de l'arbre 40, laquelle comporte des marques magnétiques 46. Le stator 42 est muni de capteurs, capables de détecter le passage de ces marques magnétiques, ce qui permet d'étudier le comportement de la poulie 12 et notamment de mesurer la vitesse de rotation de l'arbre 40 et donc de la poulie 12. Un manchon 48 sert de logement à l'arbre 40. Un roulement à billes 50 est intercalé entre l'arbre 40 et le manchon 48 de façon à assurer la rotation de l'arbre 40. Une couronne 51 est fixée au manchon 48 à l'aide de goujons 52. Cette couronne maintient longitudinalement (déplacement selon l'axe Y2-Y2') l'arbre 40. Trois vis 54, 56 et 58 (la vis 58 n'est pas visible sur les figures), régulièrement réparties à 120° l'une de l'autre et fixées dans la couronne 51, prennent appui sur le palier support 32. Elles permettent un réglage fin du positionnement de l'arbre 40.

Le dispositif de positionnement de l'arbre 40 comporte des moyens d'articulation de l'arbre 40. Ces moyens peuvent être constitués d'une rotule 60 composée d'un premier élément 62, entourant le manchon 48 et fixé à ce dernier, et d'un deuxième élément 64 fixé au palier support 32. Ces deux éléments ont la forme d'un anneau, l'élément 62 étant articulé dans l'élément 64.

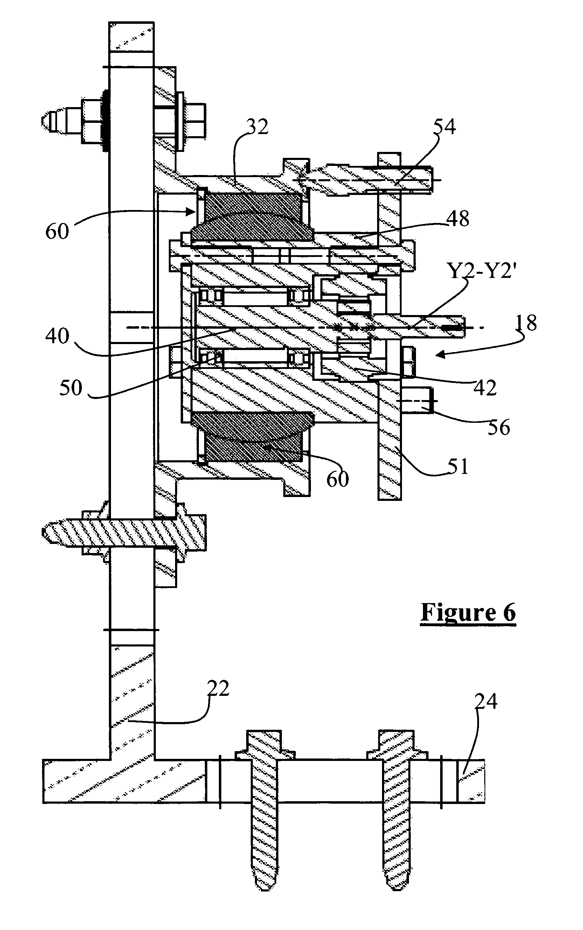

La figure 6 illustre le fonctionnement de l'articulation du dispositif de positionnement. Les moyens de maintien 18 de l'arbre 40, composés du manchon 48, de la couronne 51, des vis 54, 56 et 58 et du roulement à billes 50, ainsi que l'arbre de rotation 40 sont hachurés de la même façon et forment un ensemble articulé par rapport au palier support 32 et au bâti 22 grâce à la rotule 60. Le dispositif de positionnement 10 de l'arbre 40 permet, à l'aide des trois séries de fentes 26, 28 et 34 de faire subir à l'arbre 40 des mouvements de translation selon trois axes X, Y et Z. De plus, la rotule 60 permet des mouvements de rotation et les vis 54, 56 et 58 permettent un réglage fin de l'orientation de l'arbre 40.

L'invention permet un réglage pratiquement illimité du positionnement d'un objet, tel que l'arbre de rotation 40. Elle offre une solution tout particulièrement adaptée aux bancs d'essais, par exemple à l'étude du comportement de la poulie d'un alternateur que l'on souhaite tester. Le dispositif est notamment robuste et relativement simple.

D'autres modes de réalisation que celui décrit et représenté peut être conçu par l'homme du métier sans sortir du cadre de la présente invention. Ainsi, les capteurs décrits comme des détecteurs de marques magnétiques peuvent être différents (utilisation de détecteurs optiques par exemple).

## Revendications

1. Dispositif de positionnement (10) d'un objet (40) comprenant des moyens de maintien (18) de l'objet et des moyens de support (20, 32) des moyens de maintien, les moyens de support comprenant des éléments de translation (22, 26, 24, 28, 32, 34) de l'objet selon trois axes (X, Y, Z) orthogonaux entre eux, le dispositif étant **caractérisé en ce qu'**il comporte des moyens d'articulation (60) de l'objet fixés, d'une part, aux moyens de maintien (18) de l'objet et, d'autre part, aux moyens de support (20).

2. Dispositif selon la revendication 1 **caractérisé en ce que** les moyens de support comprennent un bâti (20) et un palier support (32), les éléments de translation comprenant une première et une deuxième série de fentes (26, 28) percées dans le bâti (20) et une troisième série de fentes (34, 36) percées dans le palier de support (32), les fentes de l'une des séries étant orthogonales aux fentes des autres séries et le palier support (32) étant fixé au bâti (20) à l'aide de moyens de fixation (38) pouvant coulisser dans les fentes (34, 36).

3. Dispositif selon la revendication 2 **caractérisé en ce que** les moyens de fixation sont constitués par des boulons (38, 30).

4. Dispositif selon l'une des revendications précédentes **caractérisé en ce que** les moyens d'articulation (60) comportent une rotule constituée d'un premier élément (64) fixé audit palier support (32) et d'un deuxième élément (62) fixé auxdits moyens de maintien (18) de l'objet.

5. Dispositif selon l'une des revendications précédentes **caractérisé en ce que** les moyens de maintien de l'objet comportent des vis de réglage (54, 56, 58) prenant appui contre le palier support (32).

6. Dispositif selon la revendication 4 **caractérisé en ce que**, l'objet étant un arbre (40) tournant autour d'un axe Y2-Y2', les moyens de maintien de l'objet comportent un manchon (48), ledit deuxième élément de rotule (62) étant fixé autour du manchon, et des roulements (50) intercalés entre ledit arbre tournant et ledit manchon.

7. Dispositif selon la revendication 6 **caractérisé en ce qu'**il comporte des moyens de liaison (16) dudit arbre tournant (40) avec un organe (14) muni d'un élément (12) tournant autour d'un axe Y1-Y1', le dispositif permettant d'aligner l'axe Y2-Y2' avec l'axe Y1-Y1 '.

8. Dispositif selon la revendication 6 **caractérisé en ce qu'**il comporte des capteurs (42) constituant des moyens de mesure de la vitesse de rotation de l'arbre (40) tournant dudit objet

9. Application du dispositif défini à l'une des revendications 6 à 8 à la mesure du comportement d'un élément tournant.

10. Application selon la revendication 9 **caractérisé en ce que** ledit élément tournant est la poulie (12) d'un alternateur (14).

## Claims

1. A device (10) for positioning an object (40) comprising retaining means (18) of the object and support means (20, 32) of the retaining means, the support means comprising translation elements (22, 26, 24, 28, 32, 34) of the object according to three axes (X, Y, Z) which are orthogonal with respect to each other, the device being **characterized in that** it comprises articulation means (60) of the object, fixed on the one hand to the retaining means (18) of the object and, on the other hand, to the support means (20).

2. The device according to Claim 1, **characterized in that** the support means comprise a frame (20) and a support bearing (32), the translation elements comprising a first and a second series of slots (26, 28) pierced into the frame (20) and a third series of slots (34, 36) pierced into the support bearing (32), the slots of one of the series being orthogonal to the slots of the other series and the support bearing (32) being fixed to the frame (20) with the aid of fixing means (38) being able to slide in the slots (34, 36).

3. The device according to Claim 2, **characterized in that** the fixing means are constituted by bolts (38, 30).

4. The device according to one of the preceding claims, **characterized in that** the articulation means (60) comprise a swivel constituted by a first element (64) fixed to the said support bearing (32) and by a second element (62) fixed to the said retaining means (18) of the object.

5. The device according to one of the preceding claims, **characterized in that** the means for retaining the object comprise regulating screws (54, 56, 58) resting against the support bearing (32).

6. The device according to Claim 4, **characterized in that**, the object being a shaft (40) turning about an axis Y2-Y2', the means for retaining the object comprise a sleeve (48), the said second swivel element (62) being fixed around the sleeve, and bearings (50) inserted between the said turning shaft and the said sleeve.

7. The device according to Claim 6, **characterized in that** it comprises connecting means (16) of the said turning shaft (40) with a member (14) provided with an element (12) turning about an axis Y1- Y1', the device permitting the axis Y2-Y2' to be aligned with the axis Y1-Y1'.

8. The device according to Claim 6, **characterized in that** it comprises sensors (42) constituting means for measurement of the rotation speed of the turning shaft (40) of the said object.

9. An application of the device defined in one of Claims 6 to 8 in the measure of the behaviour of a turning element.

10. The application according to Claim 9, **characterized in that** the said turning element is the pulley (12) of an alternator (14).

## Patentansprüche

1. Vorrichtung zum Positionieren (10) eines Objekts (40), die Mittel zum Halten (18) des Objekts und Mittel zum Tragen (20, 32) der Haltemittel aufweist, wobei die Tragmittel Elemente (22, 26, 24, 28, 32, 34) zum Verschieben des Objekts entlang von drei Achsen (X, Y, Z), die zueinander senkrecht sind, aufweisen, wobei die Vorrichtung **dadurch gekennzeichnet ist, dass** sie Mittel (60) zum Anlenken des Objekts aufweist, die einerseits an den Haltemitteln (18) des Objekts und, andererseits, an den Tragmitteln (20) befestigt sind.

2. Vorrichtung nach Anspruch 1, **dadurch gekennzeichnet, dass** die Tragmittel einen Rahmen (20) und ein Stützlager (32) aufweisen, die Verschiebungselemente eine erste und eine zweite Reihe von Schlitzen (26, 28), die in den Rahmen (20) gebohrt sind, und eine dritte Reihe von Schlitzen (34, 36), die in das Stützlager (32) gebohrt sind, aufweisen, wobei die Schlitze einer der Reihen zu den Schlitzen der anderen Reihen senkrecht sind und das Stützlager (32) an dem Rahmen (20) mit Hilfe von Befestigungsmitteln (38), die in den Schlitzen (34, 36) gleiten können, befestigt sind.

3. Vorrichtung nach Anspruch 2, **dadurch gekennzeichnet, dass** die Befestigungsmittel aus Bolzen (38, 30) bestehen.

4. Vorrichtung nach einem der vorhergehenden Ansprüche, **dadurch gekennzeichnet, dass** die Anlenkmittel (60) ein Kugelgelenk aufweisen, das aus einem ersten Element (64), das an dem Stützlager (32) befestigt ist, und aus einem zweiten Element (62), das an den Haltemitteln (18) des Objekts befestigt ist, besteht.

5. Vorrichtung nach einem der vorhergehenden Ansprüche, **dadurch gekennzeichnet, dass** die Haltemittel des Objekts Einstellschrauben (54, 56, 58) aufweisen, die auf dem Stützlager (32) anliegen.

6. Vorrichtung nach Anspruch 4, **dadurch gekennzeichnet, dass** das Objekt eine Welle (40) ist, die um eine Achse Y2-Y2' dreht, wobei die Haltemittel des Objekts einen Stutzen (48) aufweisen, wobei das zweite Kugelgelenkelement (62) um den Stutzen befestigt ist und Lager (50) zwischen die drehende Welle und den Stutzen eingefügt sind.

7. Vorrichtung nach Anspruch 6, **dadurch gekennzeichnet, dass** sie Mittel (16) zum Verbinden der drehenden Welle (40) mit einem Organ (14) aufweist, das mit einem Element (12), das um eine Achse Y1-Y1' dreht, versehen ist, wobei die Vorrichtung das Fluchten der Achse Y2-Y2' mit der Achse Y1-Y1' erlaubt.

8. Vorrichtung nach Anspruch 6, **dadurch gekennzeichnet, dass** sie Sensoren (42) aufweist, die Mittel zum Messen der Drehzahl der drehenden Welle (40) des Objekts bilden.

9. Anwendung der in einem der Ansprüche 6 bis 8 definierten Vorrichtung auf das Messen des Verhaltens eines drehenden Elements.

10. Anwendung nach Anspruch 9, **dadurch gekennzeichnet, dass** das drehende Element die Scheibe (12) eines Wechselstromgenerators (14) ist.
